(19) Europäisches Patentamt
European Patent Office
Office européen des brevets

(11) **EP 3 692 808 B1**

(12) # EUROPEAN PATENT SPECIFICATION

(45) Date of publication and mention
of the grant of the patent:
**12.04.2023 Bulletin 2023/15**

(21) Application number: **18861090.1**

(22) Date of filing: **28.09.2018**

(51) International Patent Classification (IPC):
**A23L 3/36** (2006.01)    **A23L 7/109** (2016.01)
**A23L 7/113** (2016.01)

(52) Cooperative Patent Classification (CPC):
(C-Sets available)
**A23L 3/36; A23L 7/109; A23L 7/113;**
A23V 2002/00                    (Cont.)

(86) International application number:
**PCT/JP2018/036169**

(87) International publication number:
**WO 2019/065932 (04.04.2019 Gazette 2019/14)**

(54) **METHOD FOR MANUFACTURING DRIED PASTA**

VERFAHREN ZUR HERSTELLUNG VON GETROCKNETEN TEIGWAREN

PROCÉDÉ DE FABRICATION DE PÂTES SÈCHES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.09.2017 JP 2017192039**

(43) Date of publication of application:
**12.08.2020 Bulletin 2020/33**

(73) Proprietor: **Nisshin Seifun Welna Inc.
Tokyo 101-8441 (JP)**

(72) Inventors:
• **ASAHINA, Kenta
Fujimino-shi
Saitama 356-8511 (JP)**
• **FUJII, Tomoyuki
Fujimino-shi
Saitama 356-8511 (JP)**

(74) Representative: **Forstmeyer, Dietmar et al
Boeters & Lieck
Oberanger 32
80331 München (DE)**

(56) References cited:
**EP-A1- 2 687 104      EP-A2- 0 139 813**

EP-B1- 0 139 813      EP-B1- 2 687 104
JP-A- 2004 357 571    JP-A- 2005 253 460
JP-A- 2011 217 657    JP-A- 2012 050 410
JP-A- 2016 208 865

• LAMACCHIA, C. et al.: "Changes in pasta proteins
induced by drying cycles and their relationship
to cooking behaviour", J. Cereal Sci., vol. 46, no.
61, 2007, pages 58-63, XP022117949, DOI:
doi:10.1016/j.jcs.2006.12.004
• ZWEIFEL, C. et al.: "Influence of
High-Temperature Drying on Structural and
Textural Properties of Durum Wheat Pasta",
Cereal Chem., vol. 80, no. 2, 2003, pages 159-167,
XP055563286, DOI:
doi:10.1094/CCHEM.2003.80.2.159
• AKTAN, B. et al.: "Effect of High-Temperature
Drying of Pasta on Quality Parameters and on
Solubility, Gel Electrophoresis, and
Revered-Phase High-Performance Liquid
Chromatography of Protein Components",
Cereal Chem., vol. 69, no. 3, 1992, pages 288-295,
XP055586167,

**(Cont. next page)**

(52) Cooperative Patent Classification (CPC): (Cont.)

C-Sets
A23V 2002/00, A23V 2300/10, A23V 2300/16

## Description

Technical Field

The present invention relates to dried pasta useful for low-temperature storage after cooking.

Background Art

Pasta, such as spaghetti or macaroni, is a very popular food. It has a tighter structure than other noodles to provide a smooth and firm texture. Pasta is typically made by extruding dough prepared from raw powder consisting mainly of wheat flour into a specific shape under atmospheric or reduced pressure. The pasta as extruded is called "fresh pasta", while pasta obtained by drying fresh pasta is called "dried pasta." Dried pasta keeps longer than fresh pasta. Most of the commonly distributed pasta is dried pasta.

In order to maximize the above mentioned unique texture in cooking dried long pasta, it is necessary for dried pasta to be cooked just enough to retain a firm texture in the center of the strands to the bite, namely "to al dente". That is, cooking pasta requires experience that is not needed in simply boiling foodstuffs. Besides, boiling pasta takes time because it is slow to absorb water due to its dense structure. Therefore, with the recent consumers' preference for so-called "quick cooking" food products, which require less time and work, there is a trend of preference for precooked pasta products that are made ready to eat simply by reheating in, e.g., a microwave oven.

EP 2 687 104 A1 relates to a method for manufacturing dried pasta. The dough is sent to a vacuum mixer, where it is compressed under a reduced pressure of 600 mmHg while kneading. Subsequently, the dough is extruded from a die at a pressure of 80 kg/cm2. The problem with precooked pasta products is that the water content migrates with time inside and outside the precooked pasta and, as a result, the whole pasta gets soggy and loses its unique rich texture. To address the problem of texture loss with time, patent literature 1 cited below proposes incorporating an oligosaccharide composition composed of 50% or more of tetra- to heptasaccharides to a pasta salad (precooked pasta product). However, the method of patent literature 1 is intended to be applied to a foodstuff other than pasta contained in the pasta salad, such as a mayonnaise-like foodstuff and is incapable of preventing the texture loss of the precooked pasta *per se* with time.

Patent literature 2 below discloses a method for making pasta including irradiating extruded fresh pasta with microwaves under such conditions that the pasta temperature does not exceed 75°C and drying the irradiated pasta. Patent literature 2 claims that, even when a ripening step, in which extruded fresh pasta is left to stand in a cool dark place overnight until ripe, is omitted, the resulting pasta product is excellent in texture similarly to those products obtained by a method involving such a ripening step. However, because microwaves cause the water content in pasta to heat-expand rapidly, that method is likely to reduce the pasta qualities.

Citation List

Patent Literature

Patent literature 1: JP 2002-10745A
Patent literature 2: JP 2017-23037A

Summary of Invention

An object of the present invention is to provide a method for producing dried pasta the texture of which when cooked, cold or frozen stored, and reheated by, for example, microwaving to be made eatable is comparable to that immediately after cooking.

The present invention provides, in a first aspect, a method for producing dried pasta comprising a step of preparing dough from a raw powder containing wheat flour having a protein content of 8 to 18 mass%, a step of extruding the dough under a vacuum pressure of 0 to -65 kPa at an extrusion pressure of 60 to 160 kgf/cm2 to form pasta, and a step of drying the pasta, the method comprising a GV adjustment step in which the gluten vitality of the extruded pasta is adjusted to 10 to 30%, wherein the GV adjustment step is performed after the extrusion step by any one of the following methods (A) to (C):

(A) immersing pasta in water or an aqueous liquid with a pH adjusted to 1 to 6 or 9 to 14,
(B) exposing pasta to high temperature steam of 105° to 160°C, or

(C) allowing pasta to stand to dry in a space having a temperature of 80° to 130°C and a relative humidity of 50% to 80% for 100 to 480 minutes.

The present invention also provides, in a second aspect, a method for producing a low-temperature stored, precooked pasta product. The method includes the steps of cooking dried pasta obtained by the method of the first aspect of the present invention to obtain a precooled pasta and cold-storing or freezing the precooked pasta.

Description of Embodiments

The method for producing dried pasta according to the present invention includes the steps of extruding dough prepared from a raw powder to form pasta and drying the pasta. As used herein, the term "raw powder" refers to a farinaceous flour used to prepare dough which is of powder form at ambient temperature and ambient pressure, typically exemplified by cereal flours and starches.

The raw powder for use in the invention contains wheat flour with a specific protein content of 8 to 18 mass%, preferably 11 to 16 mass% (hereinafter also referred to as a specific wheat flour). To use such a specific wheat flour in the raw powder is one of the elements necessary to adjust the gluten vitality of pasta after the dough extrusion step hereinafter described, namely, one of the elements necessary to obtain the intended effects of the present invention. The type of the specific wheat flour is not particularly limited, and any wheat flours generally used as a noodle material may be used, provided that the protein content is in the above specific range. For example, common wheat flours, such as all-purpose flour, French flour (intermediate between strong and all-purpose flours), and strong flour; and durum wheat flours, such as durum flour and semolina; and combinations thereof may be used. Protein content adjustment of wheat flour may be achieved by combining a plurality of wheat flours in a properly decided blending ratio.

The specific wheat flour content in the raw powder is preferably 70 mass% or more, more preferably 80 mass% or more, even more preferably 90 mass% or more, still more preferably 95 mass% or more, yet more preferably 100 mass%.

The raw powder for use in the invention may further contain cereal flour and starch in addition to the specific wheat flour. Examples of useful other farinaceous flours include cereal flours, such as wheat flours other than the specific wheat flour, buckwheat flour, rice flour, corn flour, barley flour, rye flour, Job's tears flour, Japanese millet flour, and foxtail millet flour; native starches, such as tapioca starch, potato starch, wheat starch, corn starch, and waxy corn starch; and modified starches obtained by modifying these native starches by one or more chemical or physical treatments, such as acetylation, hydroxypropylation, etherification, crosslinking, oxidation, and pregelatinization. These farinaceous flours may be used in combination.

The dough that can be used in the present invention is typically prepared by kneading a raw powder with mixing water. In the preparation of dough, other ingredients, such as sugars, thickeners, proteins, emulsifiers, fats and oils, brine water, and seasonings, may be used in addition to the raw powder and mixing water. Any mixing water commonly used in noodle making may be used, such as clear water, acidic water, alkaline water, and brine water. The amount of the mixing water to be added may be in the range usually used in noodle making, generally ranging from 20 to 40 parts by mass per 100 parts by mass of the raw powder.

In the extruding step of the present invention, the dough prepared from the raw powder containing the specific wheat flour is extruded at a predetermined extrusion pressure to make fresh pasta. The extrusion is carried out using a pasta extruder (pasta making machine) commonly used in making pasta of this type. A pasta extruder typically includes a cylinder, a screw rotatably disposed within the cylinder to convey the dough in the cylinder axial direction, and a die mounted at the forward end of the cylinder. The dough fed into the cylinder of this type of extruder with the screw rotating is transported by the rotating screw toward the die while being compressed by the high pressure created between the inner wall of the cylinder barrel and the screw and continuously extruded through the die openings. The thus extruded dough is fresh pasta. The shape of the pasta is not particularly limited and may be, for example, strands, such as spaghetti and fettechine; tubes, such as macaroni and penne; and sheets, such as lasagna. A desired shape of the pasta is obtained by a proper choice of the die to be mounted.

The extrusion of the dough according to the present invention is performed under a vacuum pressure of 0 to -65 kPa and an extrusion pressure of 60 to 160 kgf/cm$^2$. This extrusion condition of the dough is one of the elements necessary to obtain the effects aimed in the present invention. The extrusion condition of the dough is especially characterized in that the inside of the extruder (cylinder) is kept at a vacuum pressure of 0 to -65 kPa. In pasta manufacturing on an industrial scale, it is generally thought preferable to set the degree of vacuum high, i.e., to evacuate the cylinder to high vacuum in order to deaerate the dough being extruded to yield pasta with a dense structure. More specifically, a recommended vacuum pressure is about -80 to -101.3 kPa (corresponding to absolute vacuum). In the present invention, in contrast, the vacuum pressure in the extrusion step is 0 to -65 kPa. That is, the dough is extruded under atmospheric pressure or in low vacuum. The pasta obtained through the extrusion step of the present invention is less dense (less tight) than ordinary pasta extruded in higher vacuum and can contain entrapped air bubbles inside. Such less dense pasta is capable of yielding dried pasta which offers a good texture even when cooking is followed by cold or frozen storage, and followed by reheating into an eatable state, the texture being comparable to that obtained immediately after cooking. The vacuum pressure applied during the extrusion step is preferably 0 to -50 kPa, more preferably 0 to -30 kPa. The vacuum pressure is controllable by adjusting the amount of air in the extruder using an evacuating means, such as a pump. The vacuum pressure and the extrusion pressure are measurable with pressure gauges attached to the extruder.

The method for producing dried pasta of the present invention includes a step of drying the pasta after the extrusion step. The pasta after the drying step, i.e., dried pasta, the end objective of the method according to the present invention, preferably has a water content of 13 mass% or less with a view to allowing for long term storage at room temperature. As used herein, the term "water content" refers to that determined by an air-oven method. The drying method of the past may be carried out by any method appropriately chosen from those commonly used in dry pasta manufacturing.

One of the main characteristics of the method for producing dried pasta of the present invention consists in that the method includes the step of adjusting the gluten vitality (GV) of the extruded pasta to 10 to 30%. GV is a measure representing the properties of the proteins contained in wheat flour and is different from the protein content of wheat flour and/or a raw powder. What is noted in the present invention is the GV of the dried pasta obtained by drying the extruded fresh pasta but not that of the wheat flour in the raw powder to be made into pasta. In general, the texture of pasta tends to become firmer with a decrease in GV and softer with an increase in GV For reference, the GV of the specific wheat flour is generally about 50% to 60%, and that of commercially available dry pasta, e.g., spaghetti is generally about 40% to 46%. The method for GV determination will be described later.

As stated above, the method for producing dried pasta of the present invention is characterized in that (1) dough is prepared from a raw powder containing wheat flour having a protein content of 8 to 18 mass%, (2) the dough is extruded at a vacuum pressure of 0 to -65 kPa and an extrusion pressure of 60 to 160 kgf/cm$^2$ to form pasta, and (3) the GV of the pasta is adjusted to 10 to 30%. Combined together, these characteristics make it possible to provide dried pasta the texture of which is, when cooked, cold or frozen stored, and reheated by, for example, microwaving to be made eatable, comparable to that obtained immediately after cooking. According to the inventor's findings, it is the pasta GV adjustment following the extrusion that is particularly important of these characteristics. The GV of the extruded pasta is preferably 14% or more, more preferably 16% or more, and preferably 27% or less, more preferably 25% or less.

In order to adjust the GV of pasta to 10 to 30%, methods for reducing properties, such as viscosity, of the protein contained in wheat flour are preferably used. A method for reducing the GV of ordinary pasta made from a raw powder containing commonly used wheat flour is adopted. It includes any one of the following methods (A) to (C): (A) immersing pasta in water or an aqueous liquid with a pH adjusted to 1 to 6 or 9 to 14, (B) exposing pasta to high temperature steam of 105° to 160°C, and (C) allowing pasta to stand to dry in a humidity-controlled space (e.g., thermostat bath). The conditions for carrying out any of the methods (A) to (C), such as the treating time, may be decided as appropriate on the basis of the results of monitoring the GV of a sample taken from the pasta being treated. Method (C) is particularly preferred because it does not cause large changes of the pasta in color and texture.

When method (C) is adopted for the GV adjustment, the space in which the pasta is placed preferably has a temperature of 80° to 130°C, more preferably 100° to 115°C, and a relative humidity of 50% to 80%, more preferably 60% to 70%, and the treating time (the time to allow the pasta to stand) is 100 to 480 minutes, more preferably 150 to 360 minutes.

The GV adjustment step according to the present invention is performed after the extrusion step. The method for producing dried pasta of the present invention embraces embodiment (I) in which the extrusion step, GV adjustment step, and drying step are conducted in that order and embodiment (II) in which the GV adjustment step doubles as the drying step. In embodiment (II), the extrusion step is followed by the GV adjustment step to give dried pasta. When method (A) or (B) is used to achieve the GV adjustment step, since the pasta having been treated by method (A) or (B) is in a wet state, embodiment (I) is preferred. In using method (C), which involves drying, embodiment (II) is preferred.

The present invention provides, in its second aspect, a method for producing a low-temperature stored, precooked pasta product, which includes the steps of cooking dried pasta produced by the method of the first aspect of the present invention and cold-storing or freezing the cooked pasta. The method of cooking the dried pasta is not particularly restricted. The dried pasta may be cooked by an appropriate method in the presence of water, such as boiling or steaming. The method of cold-storing or freezing the cooked pasta is not limited, either. The cooked pasta may be either quick- or slow-frozen. When the precooked pasta is frozen, it may be frozen along with a sauce. For example, the precooked pasta may be divided into containers, such as trays, a sauce added thereto, and the sauce-coated pasta frozen. The precooked pasta may first be tossed with a sauce, then divided into containers, and frozen. Any sauce, either thick or thin, that is flowable at ambient temperature and ambient pressure may be applied. Examples of useful sauces include, but are not limited to, seasoning soy sauce, sauce for pan-fried noodles, starchy sauce, Worcester sauce, curry sauce, cream sauce, oil sauce, salt-based sauce, soy-based sauce, *miso*-based sauce, meat sauce, ketchup sauce, tomato sauce, carbonara sauce, brown sauce, and white sauce.

According to the present invention, low-temperature stored precooked pasta is provided, which can be stored for a long time and made eatable simply by reheating in a cooker, such as a microwave oven, and, furthermore, offers a good texture. Since the low-temperature stored precooked pasta is obtained by cold-storing or freezing precooked pasta prepared using the dried pasta obtained by the aforementioned method of the first aspect of the present invention, it provides, upon being reheated by, e.g., microwaving, a good texture comparable to that enjoyable immediately after cooking.

The GV of pasta is determined by the method below using a sample of the pasta in the form of ground powder. The GV determination is carried out by (1) determining the soluble crude protein content of the ground powder, followed by (2) determining the total crude protein content of the ground powder, and followed by (3) calculating the GV The crude protein contents may be determined by the Kjeldahl method or combustion method. The following describes the procedures for carrying out the Kjeldahl method.

Method for GV determination:

(1) Determination of soluble crude protein in ground powder

(a) Accurately weigh out 2 g of a sample (ground powder) in a 100 ml-beaker.
(b) Put 40 ml of 0.05 N acetic acid in the beaker and stir at room temperature for 60 minutes to prepare a suspension.
(c) Transfer the suspension obtained by (b) to a centrifuge tube, spin at 5000 rpm for 5 minutes, and collect the supernatant using filter paper to recover filtrate.
(d) Wash the beaker with 40 ml of 0.05 N acetic acid. Transfer the washing to a centrifuge tube, spin at 5000 rpm for 5 minutes, and collect the supernatant using filter paper to recover filtrate.
(e) Combine the filtrates obtained in (c) and (d) above and dilute to 100 ml in measuring flask.
(f) Transfer 25 ml of the liquid from (e) using a volumetric pipette into a Kjeldahl tube of Kjeltec Auto System available from Tecator Inc. (Sweden) and add, as a catalyst, one tablet of Kjel-Tab C (potassium sulfate:copper sulfate = 9:1 by weight) available from Nihon General K.K. and 15 ml of concentrated sulfuric acid.
(g) Set the kjeldahl tube in Kjeltec digestion furnace(DIGESTION SYSTEM 20, 1015) built in the Kjeltec Auto System, automatically digest the sample with the temperature dial set at 4 for 1 hour and then at 9 or 10 for 1 hour, subsequently automatically distill and titrate the digestion liquid using the Kjeltec distillation titration system (KJELTEC AUTO 1030) built in the Kjeltec Auto System (use 0.1 N sulfuric acid as a titrant), and calculate the soluble crude protein content of the sample (ground powder) according to the following formula (1):

[Math. 1]

$$\text{Soluble crude protein content (\%)} = 0.14 \times (T - B) \times F \times N \times (100/S) \times (1/25) \ldots (1)$$

wherein T is the amount (ml) of 0.1 N sulfuric acid required in sample titration; B is the amount (ml) of 0.1 N sulfuric acid required in blank titration; F is the titer of the 0.1 N sulfuric acid used as a titrant (determine the titer on use, or use a commercially available reagent with a known titer); N is a nitrogen-to-protein conversion factor (5.70); and S is the sample weight (g) (ground powder).

(2) Determination of total crude protein in ground powder

(a) Accurately weigh out 0.5 g of a sample (ground powder) in a Kjeldahl tube of the same Kjeltec Auto System from Tecator Inc. as used in (1) above and add one tablet of the same catalyst as used in (1)-(f) above and 5 ml of concentrated sulfuric acid.
(b) Automatically digest the sample in Kjeltec digestion furnace of the same Kjeltec Auto System as used in (1) above with the temperature dial set at 9 or 10 for 1 hour, subsequently automatically distill and titrate the digestion liquid using the same Kjeltec distillation titration system built in the same Kjeltec Auto System as used in (1) above (use 0.1 N sulfuric acid as a titrant), and calculate the total crude protein content of the sample (ground powder) according to the following formula (2):

[Math. 2]

$$\text{Total crude protein content (\%)} = (0.14 \times T \times F \times N)/S \dots(2)$$

wherein T is the amount (ml) of 0.1 N sulfuric acid required in sample titration; F is the titer of the 0.1 N sulfuric acid used as a titrant (determine the titer on use); N is a nitrogen-to-protein conversion factor (5.70); and S is the sample weight (g) (ground powder).

(3) Calculation of GV

The GV of the sample (ground powder) was calculated from the soluble crude protein content as determined in (1) and the total protein content as determined in (2) according to the following formula (3):
[Math. 3]

$$\text{GV (\%)} = (\text{soluble crude protein content/total crude protein content}) \times 100 \dots(3)$$

Examples

The present invention will now be illustrated in greater detail with reference to Examples, but it should be understood that the present invention is not construed as being limited thereto. Unless otherwise specified, all the parts and percentages are given by mass.

Examples 1 to 6 and Comparative Examples of 1 and 2

Extrusion step:
A hundred parts of durum semolina (protein content: 13%) was kneaded with 28 parts of water to make dough. The dough is extruded into strands using a pasta making machine (extruder) under the extrusion pressure and vacuum pressure shown in Tables 1 and 2 below to produce fresh spaghetti having a water content of 33%.
GV adjustment step doubling as drying step:
The fresh spaghetti was allowed to stand in a thermostat bath kept at 90°C and 75% RH for a predetermined period of time to yield dried spaghetti with a water content of 12.5%.

Examples 7 to 12 and Comparative Examples 3 and 4

Dried spaghetti with a water content of 12.5% was made in the same manner as in Example 3, except for altering the GV of the dried spaghetti by adjusting the drying conditions (ambient temperature and/or processing time) in the GV adjustment step.

Test Example

The dried spaghetti obtained in Examples and Comparative Examples was cooked in a large quantity of boiling water to a boiling yield of 220%, cooled with water, and drained off. The resulting cooked spaghetti was divided into 100 g portions in heat resistant containers. The cooked spaghetti in the container was put in a polyethylene bag not to dry and stored in a refrigerator kept at 4°C for 2 days. The thus cold-stored cooked spaghetti was heated in a 500-watt microwave oven for 45 seconds to be made edible. The thus reheated cooked spaghetti was eaten and evaluated for the texture by 10 expert panelists. The texture (hardness, elasticity, and viscosity) was scored on a 5-point scale, with 5 being the highest, according to the scoring standard below. The averages of the scores given by the 10 panelists are shown in Tables 1 and 2.
Scoring standard for texture evaluation:
Commercially available dry spaghetti ("Spaghetti" from De Cecco) was cooked in the same manner as in Examples and Comparative Examples. The cooked spaghetti was eaten immediately after cooking by the 10 expert panelists, and the hardness, elasticity, and viscosity of the spaghetti were each assigned a score of 5 representing the highest quality.
Separately, the same cooked spaghetti was put in a polyethylene bag immediately after cooking and stored in a refrigerator at 4°C for 2 days. The thus stored cooked spaghetti was heated in a 500-watt microwave oven for 45 seconds to give cooked spaghetti as Reference Example. The cooked spaghetti of Reference Example was eaten by the 10 expert panelists, and its hardness, elasticity, and viscosity were each assigned a score of 2.

In Examples and Comparative Examples, the texture poorer than that of Reference Example was assigned a score of 1, and the textures judged to be between scores of 5 and 2 were given scores 4 and 3, the former being better than the latter.

Table 1

| | | Example | | | | | | Comp. Example | | Ref. Example* |
|---|---|---|---|---|---|---|---|---|---|---|
| | | 1 | 2 | 3 | 4 | 5 | 6 | 1 | 2 | |
| Extrusion Step | Extrusion Pressure (kgf/cm$^2$) | 120 | 120 | 120 | 120 | 120 | 120 | 120 | 120 | - |
| | Vacuum Pressure (kPa) | 0 | -15 | -30 | -40 | -50 | -65 | -75 | -90 | - |
| GV (%) of Dried Pasta | | 20 | 20 | 20 | 20 | 20 | 20 | 20 | 20 | 44 |
| Water Content (%) of Dried Pasta | | 12.5 | 12.5 | 12.5 | 12.5 | 12.5 | 12.5 | 12.5 | 12.5 | 12.5 |
| Texture Evaluation | Hardness | 4.1 | 4.2 | 4.4 | 4.5 | 4.4 | 4.2 | 4.5 | 4.7 | 1.8 |
| | Elasticity | 4.6 | 4.7 | 4.7 | 4.3 | 4.2 | 4.1 | 2.9 | 3.1 | 1.9 |
| | Viscosity | 4.6 | 4.6 | 4.6 | 4.2 | 4.1 | 4.0 | 2.6 | 2.8 | 2.0 |
| * Commercially available dry pasta | | | | | | | | | | |

As shown in Table 1, the spaghetti products of Examples, in which the vacuum pressure of the extrusion step is in the range of from 0 to -65 kPa, are superior to those of Comparative Examples, in which the vacuum pressure is out of that range, in texture after reheating in a microwave oven.

Table 2

| | | Example | | | | | | | Comp. Example | | Ref. Example* |
|---|---|---|---|---|---|---|---|---|---|---|---|
| | | 7 | 8 | 9 | 3 | 10 | 11 | 12 | 3 | 4 | |
| Extrusion Step | Extrusion Pressure (kgf/cm$^2$) | 120 | 120 | 120 | 120 | 120 | 120 | 120 | 120 | 120 | - |
| | Vacuum Pressure (kPa) | -30 | -30 | -30 | -30 | -30 | -30 | -30 | -75 | -90 | - |
| GV (%) of Dried Pasta | | 10 | 14 | 16 | 20 | 25 | 27 | 30 | 7 | 34 | 44 |
| Water Content (%) of Dried Pasta | | 12.5 | 12.5 | 12.5 | 12.5 | 12.5 | 12.5 | 12.5 | 12.5 | 12.5 | 12.5 |
| Texture Evaluation | Hardness | 4.7 | 4.6 | 4.5 | 4.4 | 4.3 | 4.2 | 3.8 | 4.8 | 3.5 | 1.8 |
| | Elasticity | 3.9 | 4.1 | 4.4 | 4.7 | 4.7 | 4.4 | 4.2 | 3.5 | 3.2 | 1.9 |
| | Viscosity | 3.7 | 3.9 | 4.3 | 4.6 | 4.4 | 4.2 | 4.0 | 2.5 | 3.8 | 2.0 |
| * Commercially available dry pasta | | | | | | | | | | | |

As shown in Table 2, the spaghetti products of Examples, in which the GV of the dried pasta is in the range of from 10% to 30%, are superior to those of Comparative Examples, in which the GV is out of that range, in texture after reheating in a microwave oven.

Industrial Applicability

The method for producing dried pasta of the present invention provides dried pasta the texture of which when cooked, cold or frozen stored, and reheated by, for example, microwaving to be made eatable is comparable to that immediately after cooking.

**Claims**

1. A method for producing dried pasta comprising a step of preparing dough from a raw powder containing wheat flour having a protein content of 8 to 18 mass%, a step of extruding the dough under a vacuum pressure of 0 to -65 kPa at an extrusion pressure of 60 to 160 kgf/cm$^2$ to form pasta, and a step of drying the pasta,

   the method comprising a GV adjustment step in which the gluten vitality of the extruded pasta is adjusted to 10 to 30%,
   wherein the GV adjustment step is performed after the extrusion step by any one of the following methods (A) to (C):

   (A) immersing pasta in water or an aqueous liquid with a pH adjusted to 1 to 6 or 9 to 14,
   (B) exposing pasta to high temperature steam of 105° to 160°C, or
   (C) allowing pasta to stand to dry in a space having a temperature of 80° to 130°C and a relative humidity of 50% to 80% for 100 to 480 minutes.

2. The method according to claim 1, wherein the extrusion step, the GV adjustment step, and the drying step are conducted in this order when method (A) or (B) is used to achieve the GV adjustment step; and the extrusion step and the GV adjustment step are conducted in this order when method (C) is used to achieve the GV adjustment step.

3. The method according to claim 1 or 2, wherein the vacuum pressure of the step of extruding is 0 to -50 kPa.

4. The method according to any one of claims 1 to 3, wherein the pasta after the step of drying has a water content of 13 mass% or less.

5. A method for producing a low-temperature stored precooked pasta product comprising the steps of cooking the dried pasta obtained by the method according to any one of claims 1 to 4 to obtain a cooked pasta, and cold-storing or freezing the cooked pasta.

**Patentansprüche**

1. Verfahren zur Herstellung getrockneter Teigwaren, umfassend einen Schritt der Herstellung von Teig aus einem rohen Pulver, das Weizenmehl mit einem Proteingehalt von 8 bis 18 Massen-% enthält, einen Schritt des Extrudierens des Teigs unter einem Vakuumdruck von 0 bis -65 kPa bei einem Extrusionsdruck von 60 bis 160 kgf/cm$^2$, um Teigwaren zu bilden, und einen Schritt des Trocknens der Teigwaren,

   wobei das Verfahren einen GV-Einstellschritt umfasst, in dem die Glutenvitalität der extrudierten Teigwaren auf 10 bis 30 % eingestellt wird,
   wobei der GV-Einstellungsschritt nach dem Extrusionsschritt durch eines der folgenden Verfahren (A) bis (C) durchgeführt wird:

   (A) Eintauchen der Teigwaren in Wasser oder eine wässrige Flüssigkeit mit einem auf 1 bis 6 oder 9 bis 14 eingestellten pH-Wert,
   (B) Aussetzen der Teigwaren einem Hochtemperaturdampf von 105° bis 160°C, oder
   (C) Trocknenlassen der Teigwaren in einem Raum mit einer Temperatur von 80° bis 130°C und einer relativen Luftfeuchtigkeit von 50 % bis 80 % für 100 bis 480 Minuten.

2. Verfahren nach Anspruch 1, wobei der Extrusionsschritt, der GV-Einstellungsschritt und der Trocknungsschritt in dieser Reihenfolge durchgeführt werden, wenn Verfahren (A) oder (B) verwendet wird, um den GV-Einstellungsschritt zu erreichen; und der Extrusionsschritt und der GV-Einstellungsschritt in dieser Reihenfolge durchgeführt werden, wenn Verfahren (C) verwendet wird, um den GV-Einstellungsschritt zu erreichen.

3. Verfahren nach Anspruch 1 oder 2, wobei der Vakuumdruck des Extrusionsschritts 0 bis -50 kPa beträgt.

**4.** Verfahren nach einem der Ansprüche 1 bis 3, wobei die Teigwaren nach dem Schritt des Trocknens einen Wassergehalt von 13 Massen-% oder weniger aufweisen.

**5.** Verfahren zur Herstellung eines bei niedriger Temperatur gelagerten vorgekochten Teigwarenprodukts, umfassend die Schritte des Kochens der getrockneten Teigwaren, die durch das Verfahren nach einem der Ansprüche 1 bis 4 erhalten wurden, um eine gekochte Teigware zu erhalten, und des Kühllagerns oder Einfrierens der gekochten Teigwaren.

**Revendications**

**1.** Procédé de production de pâtes alimentaires séchées comprenant une étape de préparation de la pâte à partir d'une poudre brute contenant de la farine de blé ayant une teneur en protéines de 8 à 18 % en masse, une étape d'extrusion de la pâte sous un vide de 0 à -65 kPa à une pression d'extrusion de 60 à 160 kgf/cm$^2$ pour former des pâtes, et une étape de séchage des pâtes,

le procédé comprenant une étape d'ajustement du GV dans laquelle la vitalité du gluten des pâtes extrudées est ajustée à 10 à 30%,
dans lequel l'étape d'ajustement du GV est réalisée après l'étape d'extrusion par l'un quelconque des procédés (A) à (C) suivants :

(A) immersion des pâtes dans de l'eau ou un liquide aqueux dont le pH est ajusté à 1 à 6 ou 9 à 14,
(B) exposition des pâtes à de la vapeur à haute température de 105° à 160°C, ou
(C) laisser les pâtes reposer pour sécher dans un espace ayant une température de 80° à 130°C et une humidité relative de 50% à 80% pendant 100 à 480 minutes.

**2.** Procédé selon la revendication 1, dans lequel l'étape d'extrusion, l'étape d'ajustement du GV et l'étape de séchage sont réalisées dans cet ordre lorsque le procédé (A) ou (B) est utilisé pour réaliser l'étape d'ajustement du GV ; et l'étape d'extrusion et l'étape d'ajustement du GV sont réalisées dans cet ordre lorsque le procédé (C) est utilisé pour réaliser l'étape d'ajustement du GV.

**3.** Procédé selon la revendication 1 ou 2, dans lequel la pression de vide de l'étape d'extrusion est de 0 à -50 kPa.

**4.** Procédé selon l'une quelconque des revendications 1 à 3, dans lequel les pâtes après l'étape de séchage ont une teneur en eau inférieure ou égale à 13 % en masse.

**5.** Procédé de production d'un produit de pâtes précuites stocké à basse température comprenant les étapes de cuisson des pâtes séchées obtenues par le procédé selon l'une quelconque des revendications 1 à 4 pour obtenir des pâtes cuites, et de stockage à froid ou de congélation des pâtes cuites.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2687104 A1
- JP 2002010745 A
- JP 2017023037 A